# EUROPEAN PATENT SPECIFICATION

(11) **EP 0 991 600 B1**
(45) Date of publication and mention of the grant of the patent: **05.12.2001**
(21) Application number: 98933590.6
(22) Date of filing: 02.06.1998
(51) Int. Cl.: C03B 37/05, C03B 37/075, C03C 1/02, C03C 25/10

(54) **PRODUCTION OF MAN-MADE VITREOUS FIBRE PRODUCTS**
HERSTELLUNG VON PRODUKTEN AUS SYNTHETISCHEN GLASFASERN
PRODUITS DE FIBRES VITREUSES

(30) Priority: 10.06.1997 EP 97304009
(43) Date of publication of application: 12.04.2000
(73) Proprietor: Rockwool International A/S, DK-2640 Hedehusene (DK)
(72) Inventor: SVENDSEN, Kurt, Meldgaard, DK-7000 Fredericia (DK); NIELSEN, Herluf, N-1508 Moss (NO)
(74) Representative: Lawrence, Peter Robin Broughton
(86) International application number: EP9803334
(87) International publication number: WO9856723

(56) References cited:
- EP-A- 0 099 801
- EP-A- 0 461 995
- WO-A-97/36833
- DE-A- 2 223 683

## Description

This invention relates to the production of man-made vitreous fibre (MMVF) products from a mixture of primary fibres (ie fibres freshly made from mineral melt) and MMV fibrous waste.

It is standard practice to make an MMVF product by fiberising a vitreous melt into an air stream which is moving towards a collector and thereby forming a cloud of the primary fibres moving towards the collector, collecting the fibres on the collector as an MMVF web and converting the web to the desired MMVF product. The fiberisation is usually conducted by use of at least one centrifugal fiberising rotor. The conversion of the web to the desired product is usually by methods such as lamination and/or compression, and often involves the curing of a binder which is included in the cloud of fibres.

The commercial production of MMVF product at a production line is usually associated with the production of some MMV fibrous waste. This fibrous waste may be waste tufts, for instance relatively coarse tufted fibres or other fibrous material of inadequate quality that is collected from around the fibre formation and collecting apparatus, or it may be waste web or waste final product. For instance it may be web or product edge trimmings or other web or product which includes some defect.

It is conventional to recycle the MMV fibrous waste. One way of recycling is by remelting and incorporating the waste into the vitreous melt, but this requires the use of energy to remelt it. It is therefore more economical to recycle it while still in fibrous form.

One common way of recycling involves subjecting the fibrous waste to slight comminution so as to break it down into large tufts typically having a size mainly above 25mm and to feed this fibrous waste back into the cloud of fibres. Also there have been some proposals to hammer mill or otherwise break the waste down into very small substantially individual fibres and to feed this into the cloud, either entrained in air or as a slurry in-liquid.

It is conventionally accepted that the recycling of MMV fibrous waste tends to damage the properties of the product that is obtained, and so it is necessary to strike a careful balance between the economies that are achieved by recycling waste and the loss of quality that results from this. There are various reasons why the quality deteriorates.

For instance the recycling of the waste material in the form of large tufts or other relatively coarse fibrous product, as is conventional, has the disadvantage that it is liable to lead to localised variations in density of the final product, for instance where there is a concentration of agglomerates of tufts amongst the primary fibres.

Another problem arises because the recycled waste may originate from a product grade, or a combination of product grade, different from the intended product into which it is being recycled. For instance, a particular problem arises when the desired product which is being made is intended to have low ignition loss, for instance below 1.5% and often below 1%. The ignition loss is the loss of weight upon combustion, i.e. the weight of combustible organic materials. The main combustible material is usually binder but often there is an oil (usually a mineral oil) or other hydrophobic material, typically in an amount of 0.1-0.5%. Wetting agent can be included, usually in the absence of hydrophobic material. Such products are usually used in fire protection or other environment where strict regulations require an accurately known low ignition loss, and it is therefore unacceptable to conduct recycling in such a way that unknown amounts of binder are recycled, so that the ignition loss may be variable. Another, related, problem arises from the fact that most MMVF products are hydrophobic (due to the deliberate inclusion of oil or other hydrophobic material), but a few are hydrophilic due to the incorporation of wetting agent, eg for use as horticultural growth medium. Mixing of the two types should be avoided if quality is to be maintained.

Because of the various problems associated with attempts at recycling significant amounts of MMV fibrous waste, it is conventionally accepted that the amount of waste that can be recycled should always be kept fairly low. There have been some proposals for particular ways of recycling (for instance as a slurry of individual fibres) but there does not seem to have been any serious consideration as to whether it might be possible to achieve high amounts of recycling in a simple manner without significant deterioration in quality of the products. In particular, no successful proposal has been made as to how to obtain a good quality product of chosen grade (of ignition loss or wettability) when recycling significant amounts of fibrous waste at a plant where there are several different grades of fibrous waste produced from time to time (for instance low, medium and high ignition loss hydrophobic products and some hydrophilic (horticultural grade) products.

It is proposed in EP-A-461,995 to classify the different wastes according to density and store each density classification separately and recycle each separately. Unfortunately this technique has not proved sufficiently effective for allowing the recycling of large amounts of fibrous waste when starting with several different wastes and for obtaining good properties, in the production of a range of product grades, when recycling large amounts of waste.

According to the invention, we make a desired MMVF product having a selected grade of ignition loss and/or wettability from (a) primary MMV fibre and (b) chopped MMV fibrous waste and, optionally, (c) binder and optionally, (d) hydrophobic agent or wetting agent by a process comprising
fiberising a mineral melt into an air stream which is moving towards a collector and thereby forming a cloud of primary fibres moving towards the collector,
mixing the chopped fibrous waste and optionally binder and optionally hydrophobic agent or wetting agent into the cloud,
collecting the material on the collector as an MMVF web and
converting the web to the desired MMVF product, and in this process
the chopped waste is selected so as to have ignition loss and/or wettability consistent with (and often substantially the same as) the selected grade of ignition loss and/or wettability for the desired product and
the chopped fibrous waste has been made by chopping MMV fibrous waste to a density which is in the range 35 to 70kg/m² and/or to a density which is substantially the plateau density and/or a tuft size of at least 90% by weight below 25 mm and at least 70% above 3 mm.

In the invention we can use a wide variety of fibrous wastes, typically having low densities (e.g, 5 to 30kg/m³), medium densities (e.g., 50 to 100kg/m³) or higher densities (e.g., 100 to 300kg/m³) and, irrespective of the starting density, we crush all the wastes to a somewhat similar density value. We then store and utilise the wastes according to their ignition loss or wettability, and not according to their initial density. Thus in the invention waste of a given value is chopped to around 40-70 kg/m³ and stored in a single ignition loss silo, irrespective of the fact that some may have initially had a density as low as 20 kg/m³ and other may have had a density as high as 300 kg/m³.

The invention provides a simple and efficient solution to the problem of utilising a range of waste products (of various ignition loss and/or wettability and/or density) in the production of precisely defined products (for instance of a particular ignition loss).

We have found that it is easily possible to conduct the chopping of a fibrous waste from a medium or high density product (eg above 80 kg/m³) in such a way that, as the chopping proceeds, the density of the chopped waste initially decreases on to a minimum and then, as the chopping continues, the density increases again. The minimum often extends over a reasonably broad spread of chopping conditions and so it is convenient to refer to this minimum (irrespective of whether it extends over a narrow spread or a broad spread) as the plateau density.

When the waste is from a low density product (eg below 40 kg/m³), similar chopping conditions initially result in a significant increase in the density and the rate of increase then generally flattens out somewhat, whereafter continuation of the chopping then leads again to a significant increase in the density. The area where the rate of increase in density with increased chopping is low or zero compared to the initial and subsequent rates of increase again can be referred to conveniently as the plateau density.

In the invention, we prefer to chop to approximately the plateau density, for instance to within plus or minus 5 or 10kg/m³ of the minimum density for products which undergo a decrease in density upon initial chopping, and within plus or minus 5 to 10kg/m³ of the region where there is least rapid rate of increase of density for products which undergo an increase in density upon chopping.

The approximate density at which the plateau density values will occur may depend to some extent upon the initial fibre type (for instance glass, rock, slag and so forth) and the initial starting products. However we generally find that it is within the range 35 to 70kg/m³, especially when the mineral is a rock or slag mineral. Accordingly, instead of or in addition to defining the invention by reference to achieving substantially the plateau density, the invention can also be defined in terms of chopping the waste so as to reduce the density of the waste to a value within the range 35 to 75kg/m³ or chopping a waste so as to increase its density to within a value of 35 to 75kg/m³.

Preferably waste products having a density above 70 or 75kg/m³ are chopped to a lower value in the range 35 to 70, often around 45 to 65kg/m³. Wastes having a density initially below 35 or 40kg/m³ and often below 30 (e.g., down to 5 or 10) kg/m³ are generally chopped until they have a higher density between around 35 and 70kg/m³, frequently 35 to 50kg/m³.

Another way of defining the extent of chopping is by reference to the tuft size of the waste after the chopping. Generally at least 90% by weight of the tufts are below 20 mm. Preferably at least 70% and often at least 80% by weight of the tufts are above 3 mm and preferably at least 70% by weight are above 5 mm.

We find that if we chop the fibre waste to the desired density and if we select the waste according to ignition loss and/or wettability appropriately, it is then possible to recycle large amounts of waste in a simple manner without causing significant deterioration in the properties of the final product. It is necessary therefore to select the chopped waste such that it has an ignition loss and/or wettability consistent with the selected grade of ignition loss and/or wettability for the desired MMVF product.

As is known, MMVF products (and therefore the wastes associated as by-products with their production) usually include several different grades of ignition loss. For instance ignition loss is often quantified in terms of the weight loss on combustion and thus corresponds to the binder content. Products of low ignition loss are generally said to have a value below 1.5% or below 1%. Accordingly, if they are bonded, the amount of bonding agent is generally from about 0.5 to about 1.3% (by weight of the total product), sometimes about 0.5 to about 1.0%, and the amount of oil or other hydrophobic additive is usually up to about 0.5 or 1%, often 0.2 to 0.5% by weight. Low ignition loss products are of particular value for fire resistance.

Other ignition loss grades which may be used as waste and end product may include high ignition loss product, for instance having more than 3%, e.g., 4 to 5%, ignition loss or binder. Other grades may be of intermediate ignition loss, for instance 1.5 to 3%.

Other ways of grading MMVF products are in accordance with wettability, especially in respect of horticultural grade products. Thus a horticultural grade of MMVF product will be highly wettable due to the presence of wetting agent, and may be bonded. Normal insulation or construction grades will normally be bonded and will have low wettability or will be water repellant due to the absence of wetting agent and, generally, the presence of added oil or other hydrophobic additive.

In the invention, it is desirable that the grade of waste which goes into a desired product should be substantially the same as the grade of desired product. Thus, if the desired product is to have low ignition loss then it is necessary that the waste which goes into that product should also be of low ignition loss. In some instances, for instance when the desired product is of intermediate ignition loss, it can be convenient to utilise two different grades of waste to make a single grade, eg of intermediate ignition loss.

Although it is not essential for the ignition loss or wettability values of the desired product and the waste to be identical, they should be sufficiently close that the inclusion of the waste will not significantly detrimentally influence the properties (including the appearance) of the product.

By saying that, in the invention, the chopped waste has ignition loss and/or wettability consistent with the selected grade for the desired end product, we therefore mean that the waste must not significantly detract from the ignition loss (when that is the main criterion) or the wettability (when that is the main criterion) of the final product. Preferably the ignition loss of the waste is substantially the same (eg to within ± 0.5% or less) as the intended ignition loss of the end product. When the end product has ignition loss of not more than 1% or 1.5%, the ignition loss of the waste is preferably not more than 0.1 or 0.2% above the intended value of the end product and usually it is about the same as or less than the intended value.

The invention includes a process in which a single grade of waste is provided either in pre-chopped form or ready for chopping, and the chopped waste is then incorporated into MMVF products with which it is compatible (i.e., the waste and the products are wettable or the waste and the products are of low ignition loss or the waste and the products are of high ignition loss). However, the invention is of particular value at a plant at which two or more different grades (as regards ignition loss and/or wettability) of chopped MMVF wastes are collected separately and the chopped waste which is added to the cloud in the production of any particular MMVF product is selected from the separate grades in response to the grade of the desired product which is to be made. Thus again it is not essential for the waste to have the identical ignition loss and/or wettability to the desired end product but it should have a value sufficiently close to the desired value that the inclusion of the waste will not significantly detrimentally influence the properties of the product.

In some instances one or more of the chopped wastes which are collected separately will be delivered to the plant, for instance as manufacturing waste which has been manufactured elsewhere (i.e. at a different plant) or as reclaimed waste which has been reclaimed from a building which is being demolished or restored or from some other environment where it has been used but is no longer required. More usually, however, the invention is conducted at a plant at which two or more different grades of MMVF product are being made, with associated production of two or more grades (as regards ignition loss or wettability) of MMV fibrous waste. For instance different grades may be made alternately on a single production unit at the plant, or different grades may be made on different production units at the plant. These wastes are chopped and at least two different grades (as regards ignition loss and/or wettability) of fibrous waste are collected separately, and the chopped waste which is added to the cloud is selected from these different grades in response to the desired grade of the final product.

Often the plant makes at least three different grades of product and waste and at least three different grades of chopped waste are collected separately. As indicated above, two different grades of waste can be blended, either before or after chopping, to make a single grade (for instance of intermediate ignition loss).

Generally, however, the waste is classified into the same number of grades as are required in the desired range of products and each grade of waste is used for the manufacture of substantially the same grade of desired product.

Although it is possible always to supply pre-chopped fibrous waste material to the plant where it is to be used, the processes of the invention usually always include the step of selecting an MMV fibrous waste from amongst the one or more wastes being made at a plant and chopping the waste to the required density.

One particularly important process of the invention is for making at a plant at least two different products having different grades of ignition loss including at least one grade having a chosen low ignition loss value of below 1.5% (e.g., 0.5 to 1.0%) from a plurality of products including waste having a chosen low ignition loss (i.e., a value below 1.5% and preferably 0.5 to 1.0%) together with waste having higher ignition loss values. In this process a waste product having a low ignition loss which is about the same as or is not substantially above (eg not more than 0.2% or perhaps 0.5%) the chosen ignition loss value of the final product (i.e., below 1.5% and often 0.5 to 1.0%) is collected separately from other wastes and this waste product is chopped to the plateau density and is mixed into the cloud of primary fibres, usually with an appropriate amount of binder and optionally oil, to form a product having the desired low ignition loss.

Thus, by the invention, it is possible to make at a single MMVF plant a range of ignition loss grades utilising a range of ignition loss waste products and yet consistently manufacture a final product having a constant desired low ignition loss incorporating a significant amount of waste product.

Another process in which the invention is of particular value is associated with the production of horticultural MMVF products which are wettable, due to the presence of wetting agent. For instance the invention includes making at least two different MMVF products of which at least one has a selected grade of high wettability (thus rendering it suitable for use as a horticultural growth medium) together with at least one other product having selected grades of ignition loss. In this process the plurality of waste products which is used includes products having different grades of wettability and different grades of ignition loss, and a horticultural grade waste (i.e a waste of the desired wettability) is collected separately and this waste is chopped to the plateau density and is mixed into the cloud of fibres, usually with binder and wetting agent to form the horticultural grade end product.

The MMV fibrous waste is usually derived from preceding production of MMV fibrous product, for instance edge trimmings, coarse tuft or other waste product.

The chopping of the waste is preferably conducted in a two-stage process comprising coarse granulation (or chopping) followed by fine granulation (or chopping). The chopping is preferably by a cutting mechanism rather than a consolidating mechanism. For instance hammer milling, which has been used in some recycling processes, tends to degrade the fibre structure too far towards a non-fibrous powder, with consequential undesirable increase in density. When the granulation is conducted by coarse granulation followed by fine granulation, a convenient coarse granulator comprises counter-rotating screw cutters by which the web or other fibrous waste material is cut initially into large tufts. For instance there may be two upper cutting screws that rotate in opposite directions and a third lower cutting screw that rotates in the same direction as one of the upper two all arranged whereby the screws cut against each other. Additionally, some fixed knives can be provided in the apparatus holding the assembly of screws so as to provide further cutting surfaces.

The subsequent fine granulator preferably cuts the tufts while they are suspended in air thus minimising the amount of shear and compression which is applied to the tufts and to the fibres during the fine chopping. For instance the coarse tufts from the first stage may be cut in a centrifugal cutter in which they are cut into small tufts and carried out from the cuter while entrained in air. The cutter preferably comprises a rotatable, horizontal, circular plate which has several (typically four) fixed blades mounted upwardly around the periphery and which also carries vanes. When the plate rotates, the vanes cause the cutter to act as a centrifugal blower and the fixed blades sweep an annular path between the outer wall of the housing in which the plate is mounted and a series of stationary blades mounted in the housing around the inside of the annulus at an angle to the vertical. The tufts may be dropped through an inlet into the top centre of the housing, the rotation of the vanes and the resultant centrifugal blowing effect causes the tufts to be thrown outwardly, and they are gently cut between the rotating and fixed blades. The resultant fine tufts are carried out of a side outlet from the housing while entrained in air.

The chopped products are generally stored, for instance in hoppers or other suitable stores, separately from each of the other chopped products prior to use. Thus, even though a production plant may generate or receive only relatively small quantities of some grades of material; these quantities can be chopped and stored ready for use.

Any of the conventional ways of fiberising a vitreous mineral melt can be used. They are usually centrifugal methods. For instance the method can be a spinning cup method in which the walls of the cup contain apertures through which melt is extruded as fibres. It can be a single, non-perforated, disc or other rotor off which fibres are thrown (with fibre formation often being promoted by gas blasts) or fibre formation may be by a cascade spinner. Thus melt is thrown on to the first of a series of rotors each mounted about a substantially horizontal axis arranged so that melt is thrown from one to the next and fibres are thrown off all the rotors except possibly the first.

The fiberising technique results in the formation of a cloud of fibres around the centrifugal device and this is carried by air, in known manner, towards a perforated collector. As a result of sucking conveying air through the collector the fibres and other material in the cloud collect on the collector as a web, and the web is continuously carried away from the area where it is collected.

Binder and/or other hydrophobic material or surfactant (to make wettable, horticultural grade, products) can be added at the centrifugal spinner or into the cloud, in conventional manner.

The chopped waste product is preferably mixed into the cloud by feeding the chopped waste material, while entrained in air, into the cloud. It can be scattered into the cloud at any desired position or positions in conventional manner, but preferably the chopped waste is blasted, entrained in air, into the cloud at a direction against the direction of travel of the cloud, for instance as described in WO-A-97/32068. Reference should be made to that for description of the preferred methods for incorporating the chopped waste into the cloud of primary fibres.

By the invention it is easily possible to incorporate significant amounts of recycled waste without reducing the quality or appearance of the end product. For instance the amount (by weight of the chopped waste products) can be up to about 5% for products below 50 kg/m³ (eg 1-5% for products of 10 to 50 kg/m³), up to about 10% for products of 50 to 100 kg/m³ and up to about 20 or even 30% or more for heavier products eg above 130 or above 150 kg/m³.

The invention is illustrated in the accompanying drawings in which

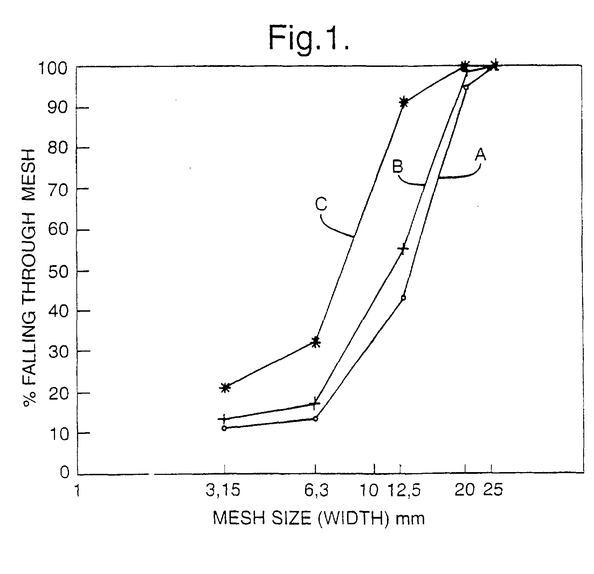

Figure 1 shows a typical size distribution of chopped waste products used in the invention, wherein (A) is derived by chopping waste of a product having a density of 29 kg/m³ and a binder content of about 2.1%, (B) is derived from a product having a density of around 35 kg/m³ and a binder content of about 2.9%, and (C) is derived from a product having a density of about 140 kg/m³ and a binder content of about 4.6%.

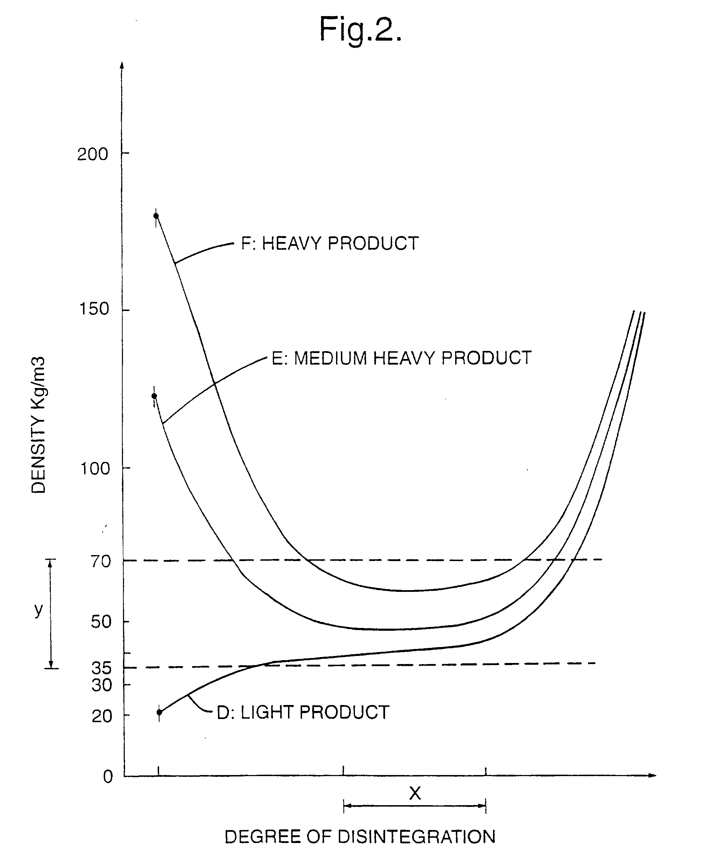

Figure 2 is a diagrammatic plot of the way in which the density of chopped product varies according to the degree of disintegration by chopping, wherein the plot for (D) is for a light product (below 35 kg/m³), the plot for (E) is a medium to heavy product (eg 80 to 120 kg/m³) and the plot for (F) is a heavy product, eg about 150 to 200 kg/m³. It will be seen that the range indicated as X is an indication of the plateau density range.

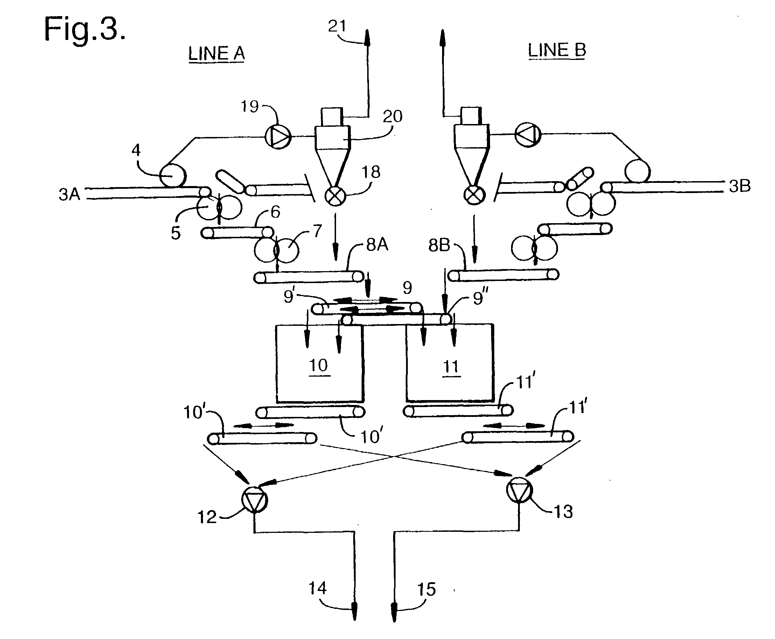

Figure 3 is a diagrammatic representation of a plant for the production of mineral fibres and which is arranged to operate in accordance with the invention.

Referring to Figure 3, the plant has two production lines 3A and 3B. Each of these is of conventional construction and comprises a cascade or other spinning apparatus for supplying primary rock or other mineral fibres and for collecting this as a web followed by lamination and bonding of the web. All this is indicated diagrammatically at 3A or, for the alternative plant, at 3B.

The resultant MMVF product is subjected to edge trimming at 4 to produce fibrous waste which is passed through a coarse granulator 5 onto a conveyor 6 by which it is fed into a fine granulator 7. The resultant finely chopped material is fed onto a conveyor 8. The edge trimming at 4 is conducted in an air stream by which free fibres are carried by a blower 19 into a cyclone 20, with substantially fibre- free air being vented at 21 and the fibres being fed by a valve 18 down onto the conveyor 8 so as to be mixed with the chopped edge trim 4.

Instead of or in addition to conducting edge trimming at 4, there may be a quality control inspection point at 4 and rejected batts or other rejected products may be diverted from the production line 3A and passed to the coarse granulator 5.

A separate line (B) feeds finely chopped fibrous waste onto its conveyor 8, as a result of a procedure broadly the same as for line (A).

The conveyors 8 of lines (A) and (B) (ie 8A or 8B), discharge onto a controllable slidable conveyors 9' and 9''.

The respective locations of conveyors 9' and 9'' are controlled having regard to the grade of product which is being made on each of lines (A) and (B), so that it is possible to sort the wastes into silos 10 and 11. For instance silo 10 may receive high ignition loss chopped and other fibrous waste, irrespective of whether it comes from line A or line B, and silo 11 may receive low ignition loss fibrous waste irrespective of whether it comes from line A or line B.

Each silo discharges onto its associated conveyor system 10' or 11'.

Each of these discharge conveyor systems 10' or 11' is connectable to a blower 12 or a blower 13 by which the material from silo 10 or the material from silo 11 can be fed to the collecting chambers 14 or 15 of different production lines, which may be, for instance, lines A or B or could be other production lines at the same plant.

As a result of selecting the waste and classifying it into two different silos 10 and 11, it is then possible to select the chopped waste from silo 10 for use in the MMVF production process which can best utilise material having that grade of ignition loss or wettability, and similarly the material in silo 11 can be utilised for the production of material having that degree of ignition loss or wettability.

## Claims

1. A process for making a desired MMVF product having a selected grade of ignition loss and/or wettability from (a) primary MMV fibre and (b) chopped MMV fibrous waste and optionally (c) binder and optionally (d) hydrophobic agent or wetting agent, comprising
fiberising a vitreous melt into an air stream which is moving towards a collector and thereby forming a cloud of the primary fibres moving towards the collector,
mixing the chopped fibrous waste and optionally binder and optionally hydrophobic agent or wetting agent into the cloud,
collecting the material in the cloud on the collector as an MMVF web and
converting the web to the desired MMVF product,
**characterised in that** the chopped waste is selected so as to have ignition loss and/or wettability consistent with the selected grade of ignition loss and/or wettability and
the chopped waste has been made by chopping MMV fibrous waste to
(i) a density which is in the range 35 to 75kg/m³ and/or
(ii) to a density which is substantially the plateau density for the fibrous waste and/or
(iii) to a tuft size at least 90% by weight below 25 mm and at least 70% by weight above 3 mm
and wherein the ignition loss is the loss of weight upon combustion and the waste either (a) has a medium or high density such that chopping of the waste initially decreases the density of the chopped waste to a minimum which is the plateau density and further chopping then increases the density or (b) has a low density such that chopping of the waste initially increases the density of the chopped product, further chopping then causes the rate of increase to flatten out partially or wholly at a value which is the plateau density and further chopping then causes a significant increase in density.

2. A process according to claim 1 which is conducted at a plant at which chopped MMV fibrous wastes of at least two different grades of ignition loss and/or wettability are collected separately and the chopped waste which is added to the cloud is selected from the separately collected grades in response to the selected grade of ignition loss and/or wettability of the desired MMVF product.

3. A process according to claim 2 which is conducted at a plant at which MMVF products of at least two different grades of ignition loss and/or wettability are produced each associated with MMV fibrous waste, and in which the wastes are chopped and chopped MMV fibrous wastes of at least two different grades of ignition loss and/or wettability are collected separately and the chopped waste which is added to the cloud is selected from the separately collected chopped wastes in response to the selected grade of ignition loss and/or wettability of the desired MMVF product.

4. A process according to claim 1 comprising the additional step of providing the selected chopped waste by selecting an MMV fibrous waste and chopping the waste.

5. A process according to claim 3 or claim 4 comprising chopping MMV fibrous waste having a density above 75kg/m³ to a density of 35 to 70, preferably 40 to 65, kg/m³.

6. A process according to claim 3 or claim 4 comprising chopping MMV fibrous waste having a density of at least 75kg/m³ to a lower density which is substantially the plateau density.

7. A process according to claim 3 or claim 4 comprising chopping MMV fibrous waste having a density below 35kg/m³ to a higher density, preferably 35 to 70 kg/m³ most preferably 35 to 60kg/m³.

8. A process according to claim 3 or claim 4 comprising chopping MMV fibrous waste having a density below 35 kg/m³ to a higher density which is substantially the plateau density.

9. A process according to claim 3 or claim 4 comprising chopping MMV fibrous waste to a tuft size at least 90% by weight below 25mm and at least 70% by weight above 3mm.

10. A process according to any preceding claim in which the chopped waste has a tuft size at least 90% by weight below 20 mm and at least 70% by weight above 5 mm.

11. A process according to any preceding claim in which the desired MMVF product has ignition loss below 1.5%, preferably below 1%, and the chopped waste which is added into the cloud has ignition loss below 1.5% preferably below 1%.

12. A process according to any of claims 1 to 10 in which the desired product is a water wettable horticultural MMV product and the chopped waste is water wettable.

13. A process according to any preceding claim in which the chopped waste is added to the cloud while the waste is entrained in air.

14. A process according to claim 13 in which the chopped waste entrained in air is mixed into the cloud of fibres by blasting the chopped waste into the cloud of fibres at a direction against the direction of travel of the cloud.

## Patentansprüche

1. Verfahren zur Herstellung eines gewünschten Produkts aus künstlichen glasartigen Fasern (MMVF-Produkt) mit einem ausgewählten Grad an Glühverlust und/oder Benetzbarkeit aus (a) primären MMV-Fasern und (b) zerkleinertem MMV-Faserabfall und gegebenenfalls (c) Bindemittel und gegebenenfalls (d) einem hydrophoben Mittel oder einem Benetzungsmittel, umfassend
Zerfasern einer Glasschmelze in einen Luftstrom, der sich zu einer Sammeleinrichtung hin bewegt, und dadurch Bilden einer Wolke der Primärfasem, die sich zur Sammeleinrichtung hin bewegt,
Mischen des zerkleinerten Faserabfalls und gegebenenfalls des Bindemittels und gegebenenfalls des hydrophoben Mittels oder des Benetzungsmittels in die Wolke,
Sammeln des Materials in der Wolke auf der Sammeleinrichtung als MMVF-Bahn und
Überführen der Bahn in das gewünschte MMVF-Produkt,
**dadurch gekennzeichnet, daß** der zerkleinerte Abfall so gewählt wird, daß er einen Glühverlust und/oder eine Benetzbarkeit aufweist, die mit dem gewählten Grad an Glühverlust und/oder Benetzbarkeit in Einklang stehen, und daß
der zerkleinerte Abfall hergestellt worden ist, indem MMV-Faserabfall auf
(i) eine Dichte, die im Bereich von 35 bis 75 kg/m³ liegt, und/oder
(ii) eine Dichte, die im wesentlichen die Plateaudichte für den Faserabfall ist, und/oder
(iii) eine Faserbüschelgröße von unter 25 mm für mindestens 90 Gewichtsprozent und von über 3 mm für mindestens 70 Gewichtsprozent
zerkleinert wird und worin der Glühverlust der Gewichtsverlust bei Verbrennung ist und der Abfall entweder (a) eine mittlere oder hohe Dichte aufweist, so daß das Zerkleinern des Abfalls am Anfang die Dichte des zerkleinerten Abfalls auf ein Minimum senkt, das die Plateaudichte darstellt, und ein weiteres Zerkleinern dann die Dichte erhöht oder (b) eine niedrige Dichte aufweist, so daß das Zerkleinern des Abfalls am Anfang die Dichte des zerkleinerten Produkts erhöht und weiteres Zerkleinern dann ein teilweises oder vollständiges Abflachen der Erhöhungsrate bei einem Wert bewirkt, der die Plateaudichte darstellt, und dann weiteres Zerkleinern einen signifikanten Anstieg der Dichte bewirkt.

2. Verfahren nach Anspruch 1, das in einer Anlage ausgeführt wird, in der zerkleinerte MMV-Faserabfälle mindestens zweier unterschiedlicher Grade an Glühverlust und/oder Benetzbarkeit separat gesammelt werden und der zerkleinerte Abfall, der zur Wolke gegeben wird, auf den gewählten Grad an Glühverlust und/oder Benetzbarkeit des gewünschten MMVF-Produkts hin aus den gesondert gesammelten Graden ausgewählt wird.

3. Verfahren nach Anspruch 2, das in einer Anlage ausgeführt wird, in der MMVF-Produkte von mindestens zwei unterschiedlichen Graden an Glühverlust und/oder Benetzbarkeit hergestellt werden, die jeweils mit MMV-Faserabfall assoziiert sind, und in der die Abfälle zerkleinert werden und die zerkleinerten MMV-Faserabfälle von mindestens zwei unterschiedlichen Graden an Glühverlust und/oder Benetzbarkeit gesondert gesammelt werden und der zerkleinerte Abfall, der zur Wolke gegeben wird, auf den gewählten Grad an Glühverlust und/oder Benetzbarkeit des gewünschten MMVF-Produkts hin aus den gesondert gesammelten zerkleinerten Abfällen ausgewählt wird.

4. Verfahren nach Anspruch 1, umfassend den zusätzlichen Schritt der Bereitstellung des gewählten zerkleinerten Abfalls durch Auswählen eines MMV-Faserabfalls und Zerkleinern des Abfalls.

5. Verfahren nach Anspruch 3 oder Anspruch 4, umfassend das Zerkleinern von MMV-Faserabfall mit einer Dichte von über 75 kg/m³ auf eine Dichte von 35 bis 70 kg/m³, bevorzugt 40 bis 65 kg/m³.

6. Verfahren nach Anspruch 3 oder Anspruch 4, umfassend das Zerkleinern von MMV-Faserabfall mit einer Dichte von mindestens 75 kg/m³ auf eine niedrigere Dichte, die im wesentlichen die Plateaudichte ist.

7. Verfahren nach Anspruch 3 oder Anspruch 4, umfassend das Zerkleinern von MMV-Faserabfall mit einer Dichte unterhalb von 35 kg/m³ auf eine höhere Dichte, bevorzugt 35 bis 70 kg/m³, am meisten bevorzugt 35 bis 60 kg/m³.

8. Verfahren nach Anspruch 3 oder Anspruch 4, umfassend das Zerkleinern von MMV-Faserabfall mit einer Dichte unter 35 kg/m³ auf eine höhere Dichte, die im wesentlichen die Plateaudichte ist.

9. Verfahren nach Anspruch 3 oder Anspruch 4, umfassend das Zerkleinern von MMV-Faserabfall auf eine Faserbüschelgröße, unter 25 mm für mindestens 90 Gewichtsprozent und über 3 mm für mindestens 70 Gewichtsprozent.

10. Verfahren nach irgendeinem vorhergehenden Anspruch, in welchem der zerkleinerte Abfall eine Faserbüschelgröße unter 20 mm für mindestens 90 Gewichtsprozent und über 5 mm für mindestens 70 Gewichtsprozent aufweist.

11. Verfahren nach irgendeinem vorhergehenden Anspruch, in welchem das gewünschte MMVF-Produkt einen Glühverlust unter 1,5%, bevorzugt unter 1%, aufweist und der zerkleinerte Abfall, der in die Wolke gegeben wird, einen Glühverlust unter 1,5%, bevorzugt unter 1%, aufweist.

12. Verfahren nach irgendeinem der Ansprüche 1 bis 10, in welchem das gewünschte Produkt ein mit Wasser benetzbares MMV-Gartenbauprodukt ist und der zerkleinerte Abfall mit Wasser benetzbar ist.

13. Verfahren nach irgendeinem vorhergehenden Anspruch, in welchem der zerkleinerte Abfall zur Wolke gegeben wird, während der Abfall von Luft mitgeführt wird.

14. Verfahren nach Anspruch 13, in welchem der in Luft mitgeführte zerkleinerte Abfall in die Wolke aus Fasern gemischt wird, indem der zerkleinerte Abfall in einer Richtung gegen die Bewegungsrichtung der Wolke in die Faserwolke geblasen wird.

## Revendications

1. Procédé pour fabriquer un produit souhaité de fibres vitreuses présentant un degré de perte d'ignition et/ou de mouillabilité choisi à partir (a) d'une fibre vitreuse primaire et (b) de déchets broyés de fibres vitreuses et éventuellement (c) d'un liant et éventuellement (d) d'un agent hydrophobe ou d'un mouillant, comprenant le fait de
fibrer un produit fondu vitreux dans un flux d'air qui se déplace vers un collecteur et qui forme par conséquent un nuage de fibres primaires se déplaçant vers le collecteur,
de mélanger les déchets broyés de fibres et éventuellement le liant et éventuellement l'agent hydrophobe ou le mouillant dans le nuage,
recueillir le matériau dans le nuage sur le collecteur comme une bande de fibres vitreuses et
transformer la bande en lui donnant la forme du produit de fibres vitreuses souhaité,
**caractérisé en ce que** les déchets broyés sont sélectionnés de manière à obtenir une perte d'ignition et/ou une mouillabilité compatibles avec le degré de perte d'ignition et/ou de mouillabilité choisi et
les déchets broyés ont été réalisés par broyage de déchets de fibres vitreuses à
(i) une densité qui est comprise dans la plage allant de 35 à 75 kg/m³ et/ou
(ii) à une densité qui est sensiblement la densité palier des déchets de fibres et/ou
(iii) à une taille de houppe d'au moins 90% en poids inférieure à 25 mm et au 70% en poids supérieure à 3 mm
et dans lequel la perte d'ignition est la perte de poids après la combustion et les déchets ont soit (a) une densité moyenne ou haute telle que le broyage des déchets diminue d'abord la densité des déchets broyés à un minimum qui est la densité palier et qu'en outre le pilage augmente ensuite la densité soit (b) une densité faible telle que le pilage des déchets augmente d'abord la densité du produit pilé, qu'en outre le pilage contraint le taux d'augmentation à s'aplatir partiellement ou totalement à une valeur égale à la densité palier et qu'en outre le pilage entraîne ensuite une importante augmentation de la densité.

2. Procédé selon la revendication 1, qui est réalisé dans une usine dans laquelle les déchets de fibres vitreuses ayant au moins deux degrés différents de perte d'ignition et/ou de mouillabilité sont recueillis séparément et les déchets broyés qui sont ajoutés au nuage sont choisis à partir des degrés recueillis séparément en réponse au degré de perte d'ignition et/ou de mouillabilité choisi du produit de fibres vitreuses.

3. Procédé selon la revendication 2, qui est réalisé dans une usine dans laquelle les produits de fibres vitreuses ayant au moins deux degrés différents de perte d'ignition et/ou de mouillabilité sont fabriqués, chacun étant associé à des déchets de fibres vitreuses, et dans lequel les déchets sont broyés et les déchets de fibres vitreuses ayant au moins deux degrés différents de perte d'ignition et/ou de mouillabilité sont recueillis séparément et les déchets broyés qui sont ajoutés au nuage sont choisis à partir des déchets broyés recueillis séparément en réponse au degré de perte d'ignition et/ou de mouillabilité choisi du produit de fibres vitreuses souhaité.

4. Procédé selon la revendication 1, comprenant l'étape supplémentaire consistant à fournir les déchets broyés choisis en choisissant des déchets de fibres vitreuses et en broyant les déchets.

5. Procédé selon la revendication 3 ou 4, comprenant l'étape consistant à broyer des déchets de fibres vitreuses ayant une densité supérieure à 75 kg/m³ à une densité comprise entre 35 et 70, de préférence comprise entre 40 et 65 kg/m³.

6. Procédé selon la revendication 3 ou4, comprenant l'étape consistant à broyer les déchets de fibres vitreuses ayant une densité d'au moins 75 kg/m³ à une densité inférieure qui est sensiblement égale à la densité palier.

7. Procédé selon la revendication 3 ou 4, comprenant l'étape consistant à broyer les déchets de fibres vitreuses ayant une densité inférieure à 35 kg/m³ à une densité supérieure, de préférence comprise entre 35 et 70 kg/m³, de manière plus préférée comprise entre 35 et 60 kg/m³.

8. Procédé selon la revendication 3 ou 4, comprenant l'étape consistant à broyer les déchets de fibres vitreuses ayant une densité inférieure à 35 kg/m³ à une densité supérieure qui est sensiblement égale à la densité palier.

9. Procédé selon la revendication 3 ou 4, comprenant l'étape consistant à broyer les déchets de fibres vitreuses à une taille de houppe d'au moins 90% en poids inférieure à 25 mm et d'au moins 70% en poids supérieure à 3 mm.

10. Procédé selon l'une quelconque des revendications précédentes, dans lequel les déchets broyés ont une taille de houppe d'au moins 90% en poids inférieure à 20 mm et d'au moins 70% en poids supérieure à 5 mm.

11. Procédé selon l'une quelconque des revendications précédentes, dans lequel le produit de fibres vitreuses souhaité présente une perte d'ignition inférieure à 1,5%, de préférence inférieure à 1%, et les déchets broyés qui sont ajoutés au nuage présentent une perte d'ignition inférieure à 1,5%, de préférence inférieure à 1%.

12. Procédé selon l'une quelconque des revendications 1 à 10, dans lequel le produit souhaité est un produit de fibres vitreuses jardinières mouillables à l'eau et les déchets broyés sont mouillables à l'eau.

13. Procédé selon l'une quelconque des revendications précédentes, dans lequel les déchets broyés sont ajoutés au nuage pendant que les déchets sont entraînés dans l'air.

14. Procédé selon la revendication 13, dans lequel les déchets broyés entraînés dans l'air sont mélangés dans le nuage de fibres par insufflation des déchets broyés dans le nuage de fibres vers une direction opposée à la direction de déplacement du nuage.
